# EUROPÄISCHE PATENTANMELDUNG

(11) **EP 1 013 205 A1**
(43) Veröffentlichungstag der Anmeldung: **28.06.2000**
(21) Anmeldenummer: 98122331.6
(22) Anmeldetag: 25.11.1998
(51) Int. Cl.: A47J 37/06, A47J 37/07

(54) **Brennstoffgrill**

(30) Priorität: 02.11.1998 EP 98120760
(71) Anmelder: Panda Stürznickel KG, 37688 Beverungen (DE)
(72) Erfinder: Stürznickel, Horst, 37688 Beverungen-Wehrden (DE)
(74) Vertreter: Patentanwälte Rehberg + Hüppe

(57) **Zusammenfassung**

Ein Brennstoffgrill weist ein Brennstoffbecken und einen über dem Brennstoffbecken angeordneten Grillrost (1) mit einer Mehrzahl von nebeneinander angeordneten Roststäben (2) zur Auflagerung von Grillgut auf. Die Roststäbe (2) sind rinnenförmig ausgebildet, wobei der Rinnengrund (3) nach unten dem Brennstoffbecken und die Rinnenöffnung (4) nach oben dem Grillgut zugekehrt ist.

## Beschreibung

Die Erfindung bezieht sich auf einen Brennstoffgrill mit einem Brennstoffbecken und einem über dem Brennstoffbecken angeordneten, eine Mehrzahl von nebeneinander angeordneten Roststäben aufweisenden Grillrost zur Auflagerung von Grillgut.

Brennstoffgrills der eingangs beschriebenen Art werden in der Regel mit Holzkohle oder Holzkohlebriketts befeuert. Gerade die Verwendung von Brennstoffen auf Holzkohlebasis führt zu einer bevorzugten Geschmacksnote des Grillguts. Darüberhinaus wird die Verwendung von Holzkohle als Brennstoff als besonders traditionell empfunden.

Insbesondere bei mit Holzkohle bzw. Holzkohlebriketts befeuerten Brennstoffgrills ist es jedoch bekannt, daß von dem Grillgut durch den Grillrost auf den heißen Brennstoff herabtropfende Stoffe, insbesondere Fett, verbrennen. Hierbei entstehen unangenehme, giftige und insbesondere karzinogene Verbrennungsprodukte, die in die Umgebungsluft gelangen und sich auch auf dem Grillgut niederschlagen. Die Verbrennungsprodukte führen so von einer Belästigung in dem bezüglich der Windrichtung hinter dem Brennstoffgrill liegenden Bereich bis zu ernst zu nehmen gesundheitlichen Gefährdungen.

Zur Reduzierung der von dem Grillgut durch die Roststäbe auf den Brennstoff herabtropfenden Stoffmengen ist die Verwendung sogenannter Grillschalen bekannt. Hierbei handelt es sich um aus dünnem Aluminiumblech geformten Schalen, die einen rippenartig geformten Grund aufweisen. Im höchsten Bereich der Rippen sind Durchbrechungen vorgesehen, damit ein gewisser Kontakt des Grillguts mit der von dem Brennstoff nach oben abströmenden heißen Luft ermöglicht wird, der zu dem gewünschten Holzkohlegrillgeschmack führen soll. Gleichzeitig nehmen die zwischen den Rippen gebildeten Rinnen von dem Grillgut herabtropfende Stoffe auf. Sie werden in den Rinnen mit der Zeit aber auch so stark erhitzt, daß eine unerwünschte Verkohlung unter Ausbildung karzinogener Stoffe erfolgt. Zudem handelt es sich bei den bekannten Grillschalen im wesentlichen um Einwegartikel, mit denen hochwertiges Aluminium zu Müll wird.

Bei Elektrogrills ist es bekannt, unterhalb einer Heizschlange, die einen Grillrost von unten anstrahlt, ein Wasserbecken vorzusehen, das die von dem Grillgut herabtropfenden Stoffe aufnimmt und ihre Erhitzung über den Siedepunkt von Wasser und damit ihre Verkohlung verhindert. Dieses Prinzip ist aber nur bei Elektrogrills realisierbar, bei denen die Heizschlange nur einen relativ kleinen Teil der Fläche unterhalb des Grillrosts ausmacht, so daß nur sehr geringe Teile der von dem Grillgut herabtropfenden Stoffe auf die Heizschlange auftreffen und nicht wie gewünscht in das darunter liegende Wasserbecken gelangen.

Der Erfindung liegt die Aufgabe zugrunde, einen Brennstoffgrill der eingangs beschriebenen Art aufzuzeigen, bei dem die Entstehung von Verbrennungsprodukten aufgrund von dem Grillgut durch den Grillrost herabtropfenden Stoffen möglichst weitgehend verhindert wird.

Erfindungsgemäß wird diese Aufgabe dadurch gelöst, daß die Roststäbe rinnenförmig ausgebildet sind, wobei der Rinnengrund nach unten dem Brennstoffbecken und die Rinnenöffnung nach oben dem Grillgut zugekehrt ist. Im Vergleich zu herkömmlichen Roststäben mit rundem Querschnitt, die keine von dem Grillgut herabtropfenden Stoffe aufzufangen vermögen, nehmen die rinnenförmigen Roststäbe des neuen Brennstoffgrills alle Stoffe auf, die über ihnen von dem Grillgut abtropfen. Dennoch handelt es sich bei den so gebildeten Rinnen um kein Wegwerf-Produkt, sondern der dauerhaft verwendete Grillrost selbst bildet die Auffangrinnen aus.

Vorzugsweise sind die Roststäbe dabei so angeordnet, daß der Rinnengrund ein Gefälle aufweist. Auf diese Weise werden die von dem Grillgut herabtropfenden Stoffe nicht nur aufgefangen, sondern auch seitlich weggeführt. Sie befinden sich damit nicht für derart lange Zeit im Einwirkungsbereich der von dem Brennstoff entwickelten Hitze, daß sie auch auf den Roststäben verkohlen.

Vorzugsweise sind die rinnenförmigen Roststäbe an ihrem tieferen Ende offen ausgebildet, wobei das tiefere Ende in oder über einer Querrinne angeordnet ist. Aus den rinnenförmigen Roststäben gelangen die von dem Grillgut abgetropften Stoffe in die Querrinne. Dabei werden sie von dem Gefälle des Rinnengrunds der Roststäbe fortgetragen. Es ist aber auch ohne weiteres möglich, hier im Einzelfall etwas nachzuhelfen, wenn beispielsweise droht, daß sich irgendwelche Stoffe in einem rinnenförmigen Roststab festsetzen. Die Neigung der von dem Grillgut abgetropften Stoffe, sich in den Roststäben festzusetzen, kann zudem reduziert werden, indem der Rinnengrund besonders glatt ausgebildet wird oder durch sonstige Ausgestaltungen ein Anhaften der Stoffe an seiner Oberfläche behindert wird. Beispielsweise kann die Oberfläche der rinnenförmigen Roststäbe zumindest im Bereich des Rinnengrunds glatt poliert oder mit einer Beschichtung versehen sein. Bei der Beschichtung wiederum kann es sich beispielsweise um eine Chrombeschichtung oder auch um eine temperatur- und oxidationsfeste Anti-Haft-Beschichtung handeln.

Die rinnenförmigen Roststäbe können grundsätzlich bogenförmig über dem Brennstoffbecken angeordnet sein. In diesem Fall sind sie vorzugsweise an beiden Enden offen, wobei die offenen Enden jeweils über einer Querrinne angeordnet sind. Einfacher ist es jedoch geradlinige rinnenförmige Roststäbe zu verwenden, die dann an ihrem dem offenen Ende gegenüberliegenden höheren Ende geschlossen ausgebildet sind. Dabei sind vorzugsweise die offenen Enden aller rinnenförmigen Roststäbe in oder oberhalb einer gemeinsamen Querrinne angeordnet.

Die Querrinne selbst kann ebenfalls ein Gefälle aufweisen, wobei die Querrinne vorzugsweise mit ihrem tieferen offenen Ende über einem entfernbaren Sammelbehälter endet und an ihren höheren Ende geschlossen ausgebildet ist. Die relative Menge der von dem Grillgut abtropfenden Stoffe, die von den rinnenförmigen Roststäben aufgefangen wird, kann durch den seitlichen Abstand der rinnenförmigen Roststäbe eingestellt werden. Typischerweise beträgt der seitliche Abstand der rinnenförmigen Roststäbe 10 bis 100 % der Breite der rinnenförmigen Roststäbe. Bevorzugt ist jedoch ein Bereich des Abstands von 15 bis 50 % der Breite der rinnenförmigen Roststäbe. Wenn der seitliche Abstand beispielsweise ein Viertel der Breite der rinnenförmigen Roststäbe beträgt, kann nur noch ein Fünftel der von dem Grillgut abtropfenden Stoffe auf den Brennstoff in dem Brennstoffbecken gelangen. Dies bedeutet eine ganz erhebliche Verminderung der dabei entstehenden Verbrennungsprodukte. Bei einem noch geringeren seitlichen Abstand der rinnenförmigen Roststäbe kann sichergestellt werden, daß die Roststäbe bis zu über 90 % der von dem Grillgut abtropfenden Stoffe auffangen.

Bevorzugt ist bei den rinnenförmigen Roststäben ein v-förmiger Querschnitt oder ein Querschnitt mit einen Halbkreisbogen. Bei dem Querschnitt der Roststäbe ist darauf zu achten, daß der Abstand des Grillguts vom Rinnengrund einerseits so groß ist, daß von den Grillgut abgetropfte Stoffe unter dem Grillgut hindurch bergab fließen können, daß aber andererseits keine allzu große Schattenwirkung der Roststäbe auftritt, wodurch das Grillgut oberhalb des Rinnengrunds nicht ausreichend erhitzt würde. Gleichzeitig muß dafür Sorge getragen werden, daß eine leichte Reinigung des Grillrosts möglich ist.

All diese Voraussetzung werden besonders gut erfüllt, wenn die rinnenförmigen Roststäbe im Querschnitt ein an der Basis offenes, rechtwinkliges Dreieck definieren. Dabei ist die Zerklüftung des Grillrosts, die potentiell seiner einfachen Reinigung im Wege steht, an der Ober- und Unterseite jeweils gleich und möglichst gering. Die Abschattungswirkung durch die Roststäbe ist begrenzt und dennoch ermöglichen sie zumindest ein problemloses Abfließen von Fett unter dem Grillgut hindurch. Die absolute Breite der Roststäbe kann ohne weiteres über 10 mm betragen. Typisch ist ein Bereich von etwa 8 bis 16 mm Breite. Aber auch darüber hinaus gehende Breiten sind denkbar, während kleinere Breiten das Abfließen der von dem Grillgut herabgetropften Stoffe immer schwieriger machen und gleichzeitig der relative seitliche Abstand der Roststäbe immer größer wird.

Günstig ist auch die Ausbildung der rinnenförmigen Roststäbe durch Halbieren von Rundrohrmaterial, so daß die Roststäbe jeweils einen oben abgeschnittenen Halbzylinder definieren.

In der Praxis erweist sich die Entwicklung von unerwünschten und gesundheitsschädlichen Verbrennungsprodukten bei dem neuen Brennstoffgrill als so gering, daß es ohne weiteres möglich ist, daß Brennstoffbecken in eine Tischplatte eines Eßtisches einzusetzen. Damit kann bei einem echten Holzkohlegrill jeder aktiv am Grillgeschehen teilnehmen, und kein einzelner muß dem abseits plazierten Grill allein bedienen. Um eine gleichmäßige Erreichbarkeit des Grills in der Tischplatte von allen Seiten zu ermöglichen, ist eine runde Tischplatte bevorzugt. Der Durchmesser der Tischplatte sollte mindestens 1,2 m, vorzugsweise 1,5 m betragen, damit niemand mit seinen Beinen Gefahr läuft, von unten an das Brennstoffbecken oder die von diesem erwärmten Teile anzustoßen. Umgekehrt haben an einem runden Tisch mit einem Durchmesser von 1,5 m durchaus bis zu 10 Personen Platz, die so gemeinsam grillen können. Zu erreichen ist der Brennstoffgrill in der Tischmitte bei Verwendung von üblichen Grillzangen für jeden der am Tisch Sitzenden.

Ein Eßtisch, in den das Brennstoffbecken des neuen Brennstoffgrills einsetzbar ist, sollte eine Durchbrechung aufweisen, um Luft von unten an den Brennstoff in dem Brennstoffbecken heranzuführen. Wenn diese Durchbrechung nach dem Entfernen des Brennstoffgrills beispielsweise durch eine Abdeckplatte verschlossen wird, kann der Eßtisch aber auch ganz normal verwendet werden.

Die Aufnahme für das Brennstoffbecken in der Tischplatte sollte eine Umrandung für das Brennstoffbecken und den darüber angeordneten Grillrost aus rostfreiem Stahl aufweisen, der möglichst poliert ist, um eine leichte Reinigung zu ermöglichen. Auch der gesamten Eßtisch kann aus Edelstahl bestehen. Dies ist aber nicht erforderlich. In gewisser Entfernung von dem Brennstoffbecken tritt keine so starke Erhitzung der Umrandung aus rostfreiem Stahl mehr auf, das nicht beispielsweise besonders fetthaltige Hölzer zur Ausbildung des Eßtisches geeignet wären. Derartige fetthaltige Hölzer aus Plantagenanbau werden bereits zur Fertigung von Gartenmöbeln verwendet und gelten als wetterfest. Ein bekannter Vertreter derartiger Hölzer ist Teakholz. Es können aber ohne weiteres auch preiswertere Hölzer bei dem Eßtisch zur Anwendung kommen.

Die Erfindung wird im folgenden Anhand von Ausführungsbeispielen näher erläutert und beschrieben. Dabei zeigt
- Figur 1: einen schematischen Querschnitt durch eine erste Ausführungsform des Grillrosts des neuen Brennstoffgrills,
- Figur 2: einen schematischen Querschnitt durch eine zweite Ausführungsform des Grillrosts des neuen Brennstoffgrills,
- Figur 3: einen schematischen Querschnitt durch eine dritte Ausführungsform des Grillrosts des neuen Brennstoffgrills,
- Figur 4: einen Längsschnitt durch den Grillrost des neuen Brennstoffgrills mit angedeuteter Lage des Brennstoffbeckens,
- Figur 5: eine Draufsicht von oben auf einen Eßtisch mit dem eingesetzten neuen Brennstoffgrill und
- Figur 6: einen Längsschnitt durch den Eßtisch gemäß Figur 5.

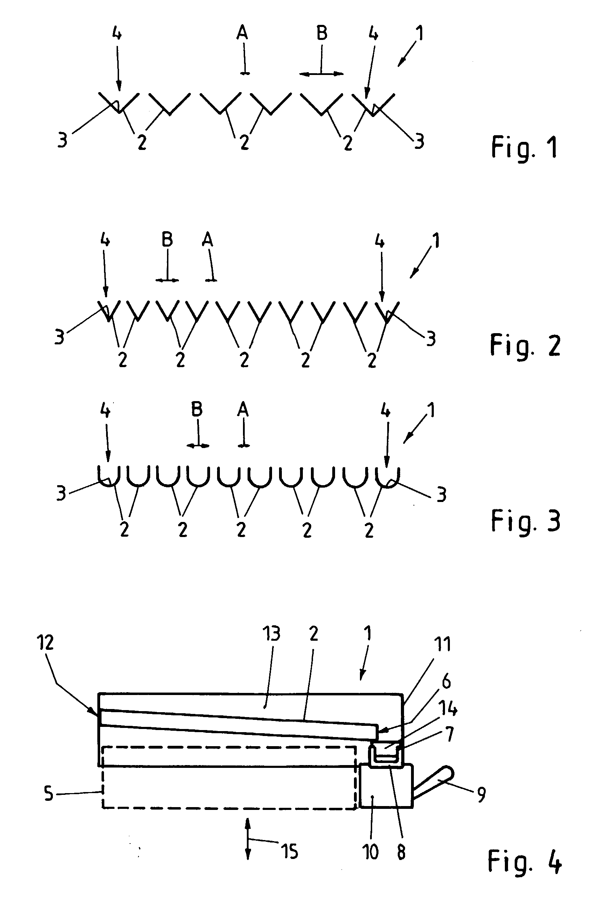

Ein in den Figuren 1 bis 3 in verschiedenen Ausführungsformen schematisch angedeuteter Grillrost 1 besteht aus einer Mehrzahl von nebeneinander angeordneten, in der Regel parallel zueinander verlaufenden Roststäben 2. Die Roststäbe 2 sind bei allen Ausführungsformen des Grillrost 1 gemäß den Figuren 1 bis 3 rinnenförmig ausgebildet. Dabei ist der Rinnengrund 3 jeweils nach unten und die Rinnenöffnung 4 jeweils nach oben gerichtet. Mit anderen Worten sind die Rinnengründe jeweils einem hier nicht dargestellten, unterhalb des Grillrosts 1 angeordneten Brennstoffbecken zugekehrt, während die Rinnenöffnungen 4 jeweils ebenfalls nicht dargestelltem, auf dem Grillrost 1 anzuordnenden Grillgut zugekehrt sind. So können die rinnenförmigen Roststäbe 2 von dem Grillgut herabtropfende Stoffe auffangen und daran hindern, auf den in dem Brennstoffbecken angeordneten Brennstoff zu gelangen und dort zu verbrennen. Der relative Anteil der von dem Grillgut abtropfenden und von den Roststäben 2 aufgefangenen Stoffe hängt von dem Verhältnis zwischen der Breite B der Roststäbe 2 zu ihrem seitlichen Abstand A ab. Gemäß Figur 1 beträgt dieses Verhältnis B:A 4:1, so daß 80 % der von dem Grillgut abtropfenden Stoffe von den rinnenförmigen Roststäben 2 aufgefangen werden. Bei den Ausführungsformen gemäß den Figuren 2 und 3 ist der aufgefangene Anteil der abtropfenden Stoffe etwas kleiner. Darüberhinaus unterscheiden sich die einzelnen Ausführungformen in dem speziellen Querschnitt der rinnenförmigen Roststäbe 2. Gemäß Figur 1 definieren die rinnenförmigen Roststäbe 2 rechtwinklige Dreiecke mit offener Basis. Diese Form ist aus funktionellen Gründen bezüglich der Ablaufmöglichkeit für die aufgefangenen Stoffe und der Reinigung des Grillrostes 1 bevorzugt. Gemäß Figur 2 definieren die Querschnitte der rinnenförmigen Roststäbe 2 etwa gleichschenklige Dreiecke; gemäß Figur 3 sind die Roststäbe 2 im Querschnitt U-förmig, wobei der Rinnengrund 3 von einem Halbkreisbogen gebildet wird. Mit zunehmender Tiefe der Roststäbe besteht die Gefahr, daß sie das Grillgut gegenüber dem die Grillhitze entwickelnden Brennstoff in dem Brennstoffbecken zu sehr abschatten und daß sie nur schwer zu reinigen sind.

Figur 4 zeigt einen vollständigen Grillrost 1 im Längsschnitt parallel zu den Roststäben 2, wobei auch die Lage des Brennstoffbeckens 5 mit gestrichelten Linien angedeutet ist. Die rinnenförmigen Roststäbe 2 weisen ein hier von links nach rechts verlaufendes, konstantes Gefälle auf. Dabei sind sie mit ihrem tieferen, offen ausgebildeten Ende 6 über einer Querrinne 7 angeordnet. Die Querrinne 7 weist ihrerseits ein hier von hinten nach vorn verlaufendes Gefälle auf und endet mit ihrem tieferen offenen Ende 8 über einem mittels eines Handgriffs 9 entfernbaren Sammelbehälter 10. Die Querrinne 7 ist an einem Rahmen 11 des Grillrosts 1 gelagert und stützt ihrerseits die an ihr befestigten tieferen Enden 6 der Roststäbe 2 ab. Die oberen Enden 12 der Roststäbe 2 stoßen stumpf auf den eine umlaufende Wandung 13 für den Grillrost 1 ausbildenden Rahmen 11 und sind dadurch geschlossen. Dies gilt auch für das obere Ende 14 der Querrinne 7. An ihrem Ende 12 sind die Roststäbe 2 überdies mit dem Rahmen 11 fest verbunden und so in ihrer Lage vollständig definiert. Alternativ könnten die Roststäbe 2 nur untereinander durch Querstreben verbunden und damit separat aus dem Rahmen 11 entnehmbar sein. Durch das Gefälle der rinnenförmigen Roststäbe 2 fließen von dem Grillgut abtropfende Stoffe zunächst in die Querrinne 7 und dann in den Sammelbehälter 10. Wenn es sich hierbei beispielsweise um Bratfett handelt, kann es erneut verwendet werden, um das Grillgut einzustreichen. Das Ablaufen der von dem Grillgut abtropfenden Stoffe über den Rinnengrund 3 der Roststäbe 2 und durch die Querrinne 7 kann beispielsweise durch eine verchromte, glatte Oberfläche gefördert werden. Das angedeutete Brennstoffbecken 5 befindet sich unterhalb der Roststäbe 2 und dabei seitlich neben der Querrinne 7. Vorzugsweise ist der Abstand des Brennstoffbeckens 5 von dem Grillrost 1 in Richtung eines Doppelpfeils 15 verstellbar, um die Hitzeeinwirkung des Brennstoffs auf das Grillgut regulieren zu können. Die von dem Rahmen 11 ausgebildete umlaufende Wandung schirmt die Oberkante des Brennstoffbeckens seitlich ab und verhindert auch ein unerwünschtes Herabfallen von Grillgut von dem Grillrost 1.

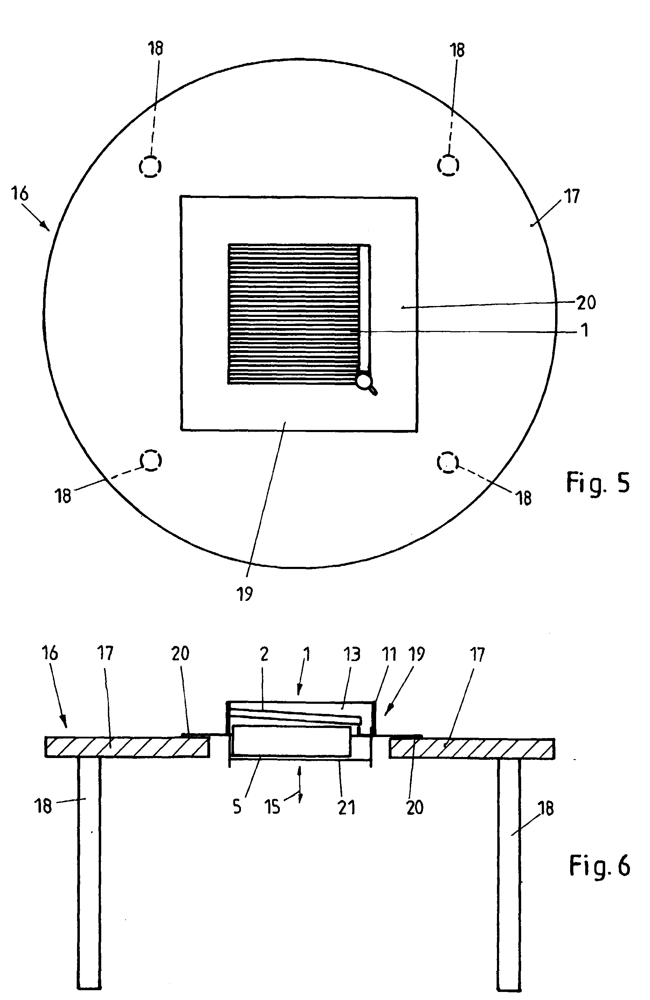

Ein in den Figuren 5 und 6 dargestellter Eßtisch 16 weist eine runde Tischplatte 17 mit einem Durchmesser von 1,5 m auf. Die Tischplatte 17 wird von vier Tischbeinen 18 getragen. Die Tischbeine 18 und der wesentliche Teil der Tischplatte 17 bestehen aus fetthaltigem Tropenholz aus Plantagenanbau. In der Mitte der Tischplatte 17 ist eine Aufnahme 19 für das Brennstoffbecken 5 mit einer Umrandung 20 aus rostfreiem Stahl vorgesehen, die auch einen Abstand des Brennstoffbeckens 5 zu den hölzernen Bestandteilen des Eßtisches 16 sicherstellt. Ein Boden 21 der Aufnahme 19, bei dem es sich um einen Rostboden handeln kann, ist in Richtung des Doppelpfeils 15 höhenverstellbar. Die Aufnahme 19 stützt auch den Rahmen 11 des Grillrosts 1 ab, der sich jedoch auf fester Höhe gegenüber der Tischplatte 17 befindet.

Der Eßtisch 16 mit dem integrierten Grilltisch 1 bis 14 ermöglicht ein neues Grillerlebnis. Bei einem echten Holzkohlegrill können jetzt alle Teilnehmer eines Grillessens an den Eßtisch 16 Platz nehmen und ihr Grillgut ganz nach Belieben selber auf dem Grillrost 1 grillen. Dabei ist eine Beeinträchtigung durch Verbrennungsprodukte der von dem Grillgut auf den Brennstoff in den Brennstoffbecken 5 herabtropfenden Stoffe weitestgehend vermieden. Die Wärmeentwicklung des Brennstoffgrills nach unten ist durch den Durchmesser des Eßtisches von deutlich über 1,2 m unschädlich gemacht. Es besteht keine nennenswerte Gefahr, daß die Teilnehmer des Grillessens mit ihren Knieen an heiße Teile des Brennstoffgrills stoßen. An kühleren Abenden wird die Wärmeentwicklung des Brennstoffgrills nach unten sogar als besonders angenehm empfunden. Die Erreichbarkeit des Grillrostes 1 an der Oberseite der Tischplatte 17 ist bei Verwendung von hier nicht dargestellten Grillzangen ohne weiteres gegeben.

### BEZUGSZEICHENLISTE

- 1: - Grillrost
- 2: - Roststab
- 3: - Rinnengrund
- 4: - Rinnenöffnung
- 5: - Brennstoffbecken
- 6: - Ende
- 7: - Querrinne
- 8: - Ende
- 9: - Handgriff
- 10: - Sammelbehälter
- 11: - Rahmen
- 12: - Ende
- 13: - Wandung
- 14: - Ende
- 15: - Doppelpfeil
- 16: - Eßtisch
- 17: - Tischplatte
- 18: - Tischbein
- 19: - Aufnahme
- 20: - Umrandung
- 21: - Boden

## Patentansprüche

1. Brennstoffgrill mit einem Brennstoffbecken und einem über dem Brennstoffbecken angeordneten, eine Mehrzahl von nebeneinander angeordneten Roststäben aufweisenden Grillrost zur Auflagerung von Grillgut, **dadurch gekennzeichnet**, daß die Roststäbe (2) rinnenförmig ausgebildet sind, wobei der Rinnengrund (3) nach unten dem Brennstoffbecken (5) und die Rinnenöffnung (4) nach oben dem Grillgut zugekehrt ist.

2. Brennstoffgrill nach Anspruch 1, **dadurch gekennzeichnet**, daß die Roststäbe (2) so angeordnet sind, daß der Rinnengrund (3) ein Gefälle aufweist.

3. Brennstoffgrill nach Anspruch 2, **dadurch gekennzeichnet**, daß die rinnenförmigen Roststäbe (2) an ihrem tieferen Ende (6) offen ausgebildet sind und das tiefere Ende (6) in oder über einer Querrinne (7) angeordnet ist.

4. Brennstoffgrill nach einem der Ansprüche 1 bis 3, **dadurch gekennzeichnet**, daß die rinnenförmigen Roststäbe (2) zumindest in Bereich des Rinnengrunds (3) eine beschichtete, vorzugsweise eine verchromte Oberfläche aufweisen.

5. Brennstoffgrill nach Anspruch 3 oder 4, **dadurch gekennzeichnet**, daß die offenen Enden (6) aller rinnenförmigen Roststäbe (2) in oder überhalb einer gemeinsamen Querrinne (7) angeordnet sind.

6. Brennstoffgrill nach einem der Ansprüche 3 bis 5, **dadurch gekennzeichnet**, daß die Querrinne (7) ein Gefälle aufweist, wobei die Querrinne (7) mit ihrem tieferen offenen Ende (6) über einem entfernbaren Sammelbehälter (10) endet und an ihrem höheren Ende (14) geschlossen ausgebildet ist.

7. Brennstoffgrill nach einem der Ansprüche 1 bis 6, **dadurch gekennzeichnet**, daß der seitliche Abstand (A) der rinnenförmigen Roststäbe (2) 10 bis 100 %, vorzugsweise 15 bis 50 %, der Breite (B) der rinnenförmigen Roststäbe (2) beträgt.

8. Brennstoffgrill nach einem der Ansprüche 1 bis 7, **dadurch gekennzeichnet**, daß die rinnenförmigen Roststäbe (2) im Querschnitt v-förmig sind, wobei sie vorzugsweise ein an der Basis offenes, rechtwinkliges Dreieck definieren, oder einen nach oben offenen Halbkreisbogen aufweisen.

9. Brennstoffgrill nach einem der Ansprüche 1 bis 8, **dadurch gekennzeichnet**, daß das Brennstoffbecken (5) in eine Tischplatte (17) eines Eßtisches (16) einsetzbar ist.

10. Brennstoffgrill nach Anspruch 9, **dadurch gekennzeichnet**, daß eine Aufnahme (19) für das Brennstoffbecken (5) in der Tischplatte (17) eine Umrandung (20) aus rostfreiem Stahl für das Brennstoffbecken (5) und den darüber angeordneten Grillrost (1) aufweist.
